# EUROPEAN PATENT SPECIFICATION

(11) **EP 3 236 766 B1**
(45) Date of publication and mention of the grant of the patent: **25.12.2024**
(21) Application number: 15817407.8
(22) Date of filing: 28.12.2015
(51) Int. Cl.: A23C 21/08, A61K 9/00, A23L 33/00, A23L 33/17

(54) **PRODUCT COMPRISING A CONTAINER AND WHEY PROTEIN**
PRODUKT MIT EINEM BEHÄLTER UND MOLKEPROTEIN
PRODUIT COMPRENANT UN RÉCIPIENT, ET PROTÉINE LACTOSÉRIQUE

(30) Priority: 26.12.2014 WO PCT/IB2014/003124; 26.12.2014 WO PCT/IB2014/003125; 26.12.2014 WO PCT/IB2014/003126
(43) Date of publication of application: 01.11.2017
(73) Proprietor: Compagnie Gervais Danone, 75009 Paris (FR)
(72) Inventor: VALENTINI, Céline, 92320 Chatillon (FR); BA, Jean-François, 94400 Vitry sur Seine (FR)
(74) Representative: Regimbeau
(86) International application number: PCT/EP2015/081309
(87) International publication number: WO 2016/102712

(56) References cited:
- WO-A1-2009/011573
- WO-A1-2014/027023
- US-A1- 2004 118 710
- US-A1- 2008 286 416

## Description

The invention relates to a product comprising a container and a composition comprising a high amount of whey protein, in the container. The composition presents, in the container, a modified, controlled texture.

Document US 2013/0330309 describes whey protein dry powders and ready to drink beverages obtained therefrom by mixing with a liquid such as water. The beverage can be packaged in a 50 to 500 ml pouch. The powder contains at least 90% by weight of whey protein, and can be mixed with liquid, such as water, in an amount of 80 to 99% percent by weight. Thus the range of whey protein in the beverage is from 0.9% to 18.0%. Except as to "liquid" or "drink", the document does not disclose any rheology and does not suggest any step that would allow a texture modification. It is expected that a simple mixture of water and powder provide a liquid. There is a need for products having a different texture.

Document WO 2010/099185 describes, for example in claims 24 and 10, a composition comprising 15-20% of whey protein, at an acidic pH of up to 3.9, heat treated to form a protein gel. The acidic conditions are said to be important for preservation and gel formation. The composition can be packaged in bags or aluminum form-fill-seal goods. There is however a need for product having a different organoleptic profile, different from profiles of acidic products.

Document WO 2009/011573 describes beverages having a pH of 6.6-8.2, comprising 5-12% of whey protein and 4-16% of specific sugars. The document teaches that these formulations allow avoiding the formation of gels upon heating, and thus to have a liquid beverage. The document discloses that the beverage can be packaged in various containers such as bottle or can. There is a need for products having a different texture.

Document EP 1543734 describes gelled compositions having a pH of at most 4, comprising at most 8% of proteins, 0.1 to 0.5% of calcium, acidulants, and from 4 to 20% of carbohydrates. In the examples the composition is filled in pouches, and the pouches are then heated to allow a gel formation. Document EP 1541042 provides quite similar teachings about acidic gelled products. There is however a need for product having a different organoleptic profile, different from profiles of acidic products. There is also a need for processes that are more practical and do not involve heat treatment in a pouch.

US 2008/286416 discloses a liquid human milk supplement comprising a protein component, a fat component, a carbohydrate component, vitamins, and minerals, where the pH of the human milk supplement is between about 4.0 and 4.6.

Various products comprising a pouch packaging and a composition comprising whey protein have been released on the market, typically associated to practicing sport and fitness. Most of these products are whey protein solid powders packaged in pouches. There is a need for other forms of products that can be readily consumed. Some products are gelled high energy shots, having a low serving size, typically about 30 g, and having a very high energy density, mostly provided by carbohydrates. An example is a 29 g pouch comprising a gel having about 310 kcal per 100 g, comprising 62% by weight of carbohydrates and 10.3% by weight of whey protein. Such formulations, with very high solids contents are very specific, and not adapted to the needs of some consumers for efficient whey intake with a balanced carbohydrate intake. There is a need for other forms of products, with high concentration of whey proteins, allowing a significant whey protein intake in a serving that is not too high, with moderate energy density, and with an appealing texture.

The invention addresses at least one of the problems or needs above with a product comprising a container and a viscous composition contained in the container, wherein:
- the composition comprises at least 8.0% by weight of whey protein, has a pH of from 6.0 to 8.0, and has an energy density of less than 200 kcal per 100 g, and
- the container is a flexible container.

The invention also concerns a process for preparing the products. The invention also concerns the use of the product, including its process of use.

It has been surprisingly found that the compositions of the invention undergo different texture evolutions when they are contained in a flexible container, such as a pouch, or in a non-flexible container, such as a bottle or cup. It has thus been found that packaging the compositions in a flexible container can provide a more appropriate, different, texture that can be appreciated by consumer. Moreover the texture is better controlled over time, for example during a shelf life, being for example more stable.

### Definitions

In the present application a shelf life refers to a storage period, at shelf temperature such as at ambient or at chilled temperature of at least 7 days, preferably at least 14 days, preferably at least 30 days, after a final preparation step. The shelf life can be of up to 40 or 50 days for products to be stored at chilled temperature. The shelf life can be of several months, for example up to 3 or 6 months or even more for products to be stored at ambient temperature.

In the present application a chilled temperature refers to a temperature of from 2°C to 10°C, preferably from 4°C to 10°C, for example to a temperature of a refrigerator.

In the present application a room temperature or ambient temperature refers to a temperature of from 15°C to 35°C, preferably from 20°C to 25°C. A room temperature is typically used herein for a temperature at a production facility. An ambient temperature is typically used herein for a temperature after production, for example on shelves.

In the present specification, unless otherwise provided, the viscosity refers to the viscosity as measured, preferably after 10 s at a shear rate, preferably with a rheometer with 2 co-axial cylinders, for example with a Mettler^{®} RM 180 or 200, at an indicated temperature and shear. The temperature is typically 10°C or 30°C. The shear rate is typically 64 s⁻¹ or 1290 s⁻¹. If the temperature is not mentioned the temperature is to be 10°C. If the shear is not mentioned the shear is to be 64 s⁻¹.

In the present application the gel strength refers to the force (in grams) measured by a penetrometry texture analyser, for example, with a TA.XT2 texture analyzer, with the following settings:
- mobile: a cylinder Probe 10, 1.3 cm diameter and 35 mm height
- temperature: 10°C
- calibration for mobile: 5 kg
- mobile speed: 0.2 mm/s
- penetration distance: 15 mm
- sensibility of detection: 0.5 g.

In the present specification a "viscous" composition refers to a composition that is not liquid or pourable. Preferably a viscous composition meets the following criteria: after 1 minute, at a room temperature, preferably at 20°C, a maximum of 10% by weight of the composition would flow out of a container with an opening, upon positioning the container vertically, such that the opening is at the lowest altitude. Viscous compositions encompass compositions with a gel texture. Preferably, a viscous composition has a viscosity of from 500 mPa.s to 50000 mPa.s, preferably from 1000 mPa.s to 10000 mPa.s, preferably from 1500 mPa.s to 5000 mPa.s, at 10°C at 64 s⁻¹ or 10°C at 1290 s⁻¹. Preferably a viscous composition has a strength of at least 30 g, preferably at least 500 g, preferably at least 1000 g.

In the present invention, unless otherwise specified, the percentages are percentages by weight.

### Product

The product of the invention is a food product comprising a composition to be administered orally, and a container wherein the composition is contained. In otherwords the container is the packaging of the composition. The product is typically a sealed product: the container comprising the product is typically sealed before a first use. Upon a first use, the consumer typically provides an opening to the container with altering the container, for example by tearing or cutting a flexible part or by breaking a temper evidence on the cap.

The volume of composition can typically correspond to 70-100%, preferably 80-100%, of the maximum volume of the container.

### Container

The container is a flexible container. By flexible container it is meant that the container comprises at least a part that is made of a flexible material, such as a monolayer or multilayer laminate, that can be substantially deformed by manipulating. The laminate can have for example a thickness of less than 0.5 mm, preferably less than 0.3 mm, for example less than 0.1 mm. The laminate typically exhibits barrier properties suitable for packaging food compositions. Examples of materials that can be used in the laminate include papers, metal foils or coatings, and plastic film or coatings.

The packaging can be for example a pouch. Flexible pouches are known by the one skilled in the art of packaging. They typically include a plied or folded part and a sealed part, typically a thermosealed part. Typically a laminate is handled and partially sealed to provide a filling opening, then the composition is filled via the filling opening, and then the pouch is closed by further sealing and/or by providing a pre-formed closure, such as a cap.

In a preferred embodiment the container is a pouch container known as doypack. In a preferred embodiment the container has an opening, preferably having a size of from 1 mm to 15 mm, preferably from 5 mm to 15 mm, preferably closed by a non-flexible cap. It is meant that the container is such that at least after a first use opening, the container is provided with the opening, said opening allowing the composition to be dispensed out of the container. The opening is preferably closed, for example with a tearable or cuttable portion or with a cap. In one embodiment, for example with caps, the opening can be closed again after first use. In one embodiment the opening cannot be closed again, without further means, after first use.

The container can be for example a container having a maximum volume of 50 ml (or 50 g) to 500 ml (or 500 g), for example from 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 200 ml (or 200 g) to 250 ml (or 250 g), or 250 ml (or 250 g) to 300 ml (or 300 g), or 300 ml (or 300 g) to 500 ml (or 500 g).

The composition in the container has preferably a gel strength of from 1000 g to 8000 g, preferably from 1000 g to 5000 g, preferably from 1000 g to 2800 g. Such a texture allows the composition to be well dispensed from the container via the opening, while being appreciated in mouth.

The product can be stored at a chilled temperature or at an ambient temperature.

### Composition

The composition comprises at least 8.0% by weight of whey protein, and has a pH of from 6.0 to 8.0.

The composition is typically a heat-treated composition, for example a pasteurized or sterilized composition.

The composition has an energy density of less than 200 kcal per 100 g. It is believed that compositions having an energy density higher than 200 kcal per 100g would not be adapted to regular consumption by consumers that do not present food-related pathologies or other specific needs. Moreover such compositions would be loaded with carbohydrates and/or fats that can modify the rheology. The energy density is preferably lower than 150 kcal per 100 g, preferably lower than 120 kcal per 100 g, preferably lower than 110 kcal per 100 g. Fat preferably represent at most 25% of the energy, preferably at most 20%, for example from 5% to 20%. Carbohydrates preferably represent at most 65% of the energy, preferably at most 60%, for example from 40% to 60%. Protein preferably represents at least 20% of the energy, preferably at least 30%, for example from 30% to 50%.

The composition is typically an aqueous composition, comprising water and ingredients. It is mentioned that a part of the water can come from ingredients used to prepare the composition. The composition can for example have a dry matter content of up to 60% by weight, preferably from 8% to 50% by weight. The composition can have a water content of from 92% to 50% by weight. The water can typically be the matrix or carrier of the composition, wherein the ingredients are introduced. Other matrix or carriers, can for example include milk-based liquids or fruit juices, either obtained directly from milk or fruits, or reconstituted by mixing powder(s) or concentrate(s) therefrom with water. In one embodiment the matrix or carrier is different from a milk-based liquid or from a fruit juice. In one embodiment the composition is different from a milk-based composition or from a fruit juice based composition. The water has preferably a low amount of minerals. The water is preferably demineralized water or osmosed water.

The composition has a pH of from 6.0 to 8.0, for example from 6.0 to 6.5 or from 6.5 to 7.0, or from 7.0 to 7.5 or from 7.5 to 8.0. It is believed that in this range the whey protein is typically in a form different from a colloidal suspension, which allows gelling, typically at the high concentrations of the invention, typically after some heat treatment.

The composition can comprise at least 8.50% by weight, preferably at least 9.50%, preferably at least 10.0%, of whey protein. Preferably the composition is an aqueous composition comprising from 10.0% to 17.5% by weight of whey protein, for example from 10.5% to 17.5%. The whey protein is typically provided in the composition from a whey protein source or ingredient.

Whey proteins are known by the one skilled in the art, and are commercially available. Whey is typically manufactured by coagulating milk, and is typically obtained as a by-product of cheese or fermented milk production. Whey can be sweet whey or acid whey, from which the whey protein are concentrated. The concentration of protein in whey is typically increased by removing lipids and other non-protein materials. For example spray drying after membrane filtration separates the proteins from whey. Whey protein is the collection of globular proteins isolated from whey. Whey proteins are typically comprised of a mixture of α-lactalbumin, β-lactoglobulin, and optionally serum albumin. The amounts of these compounds in the whey protein can vary. Typical proportions are for example the following: 60-70 wt% α-lactalbumin, 20-30 wt% β-lactoglobulin, 0-10 wt% serum albumin.

It is mentioned that the whey proteins of the invention are typically non-hydrolyzed whey proteins. Whey proteins that can be used in the invention include Whey Protein Concentrates (WPC) and, preferably Whey Protein Isolates (WPI).

In certain embodiments the protein present in the whey protein source, for example a whey protein concentrate (WPC), a whey protein isolate (WPI), or a blend of whey protein sources including a blend of WPCs or WPls or both, comprises, consists essentially of, or consists of non-hydrolysed whey protein. In one embodiment, the protein present in the WPC or WPI comprises at least 65% non-hydrolysed protein, at least 70% non-hydrolysed protein, at least 75% non-hydrolysed protein, at least 80% non-hydrolysed protein, at least 85% non-hydrolysed protein, at least 90% non-hydrolysed protein, at least 95% non-hydrolysed protein, or at least 99% non-hydrolysed protein. In one embodiment, the WPC or WPI is substantially free of hydrolysed protein.

In one embodiment, the whey protein is provided by an ingredient that comprises a protein content of 35% to 95% by weight of the dry matter of the ingredient.

A whey protein concentrate (WPC) is a fraction of whey from which lactose has been at least partially removed to increase the protein content to at least 20 wt%. Preferably the WPC has at least 40 wt%, more preferably at least 55 wt%, even more preferably at least 65 wt% and most preferably at least 75 wt% of the total solids as whey protein. Preferably, the relative proportions of the various whey proteins are substantially equivalent to those of the whey from which the WPC is obtained. Preferably, the WPC is an evaporated whey protein retentate. WPCs are generally prepared by ultrafiltration and/or diafiltration of whey. In one embodiment the whey protein ingredient is an utrafiltrated WPC. A whey protein isolate (WPI) is a WPC having at least 90% of the total solids as whey protein. Preferably, the protein composition in the ingredient is substantially that of the whey from which it is obtained.

The whey protein ingredient, preferably WPI, might comprise an amount of minerals, including for example sodium and/or calcium and other minerals. Preferably the amount of minerals in the whey protein is of less than 3250 mg per 100 g, preferably less than 2000 mg per 100g. Preferably the amount of calcium in the whey protein is of less than 300 mg per 100 g, preferably less than 200 mg per 100g, preferably less than 100 mg per 100 g. Preferably the amount of sodium in the whey protein is of less than 500 mg per 100 g, preferably less than 300 mg per 100 g, preferably less than 200 mg per 100 g. Preferably the amount of minerals in the whey protein is of less than 3250 mg per 100 g, and the amount of calcium in the whey protein is of less than 300 mg per 100 g, and the amount of sodium in the whey protein is of less than 500 mg per 100 g. For example the amount of minerals in the whey protein can be of less than 2000 mg per 100 g, and the amount of calcium in the whey protein can be of less than 200 mg per 100 g, and the amount of sodium in the whey protein can be of less than 300 mg per 100 g.

Whey proteins in a native state are in a globular form. Upon processing, for example upon heating, whey proteins can be denaturated, being thus at least partially in a form that does not correspond to the globular native form, for example in a non-globular unfold form. This phenomenon is known by the one skilled in the art. The whey protein ingredient is typically an ingredient wherein the whey protein is not or is slightly in a denaturated state. Preferably at most 45% of the whey protein in the ingredient is in a denaturated state, preferably at most 35%. In one embodiment 5-30% of the whey protein in the ingredient is in a denaturated state. It is mentioned that, in the composition after having undergone a preparation process, some of the whey protein can be in a denaturated state, preferably with from more than 45% to 90% being in denaturated state, for example from 60% to 80%.

It is mentioned that the whey proteins, along the preparation process of the composition, from the whey protein source or ingredient to the intermediate preparations and to the final composition, typically do not undergo a drying step and/or a concentration step. In this aspect, the preparation, the composition, and the process to make the same are typically different from compositions of whey protein ingredients to be added in a formulation and processes to make whey protein ingredients to be added in a formulation.

The composition can comprise some other proteins different from whey proteins, for example casein compounds such as non-micellar casein compounds, for example caseinates, or vegetal proteins such as soy protein or pea protein. Preferably the weight ratio between whey proteins and other proteins is of higher than 78/22, preferably higher than 80/20, preferably higher than 90/10.

It is mentioned that the composition typically comprises a leucine component, as part of the whey protein. The composition can comprise some added free leucine, preferably L-leucine, added to further increase the leucine content. The total leucine can be thus adjusted, if needed, to be for example of 1% to 2% by weight of the composition, of which from 10% to 50% by weight or number is preferably free-leucine.

The composition preferably comprises sugar. Sugar helps in providing organoleptic properties appreciated by consumers. Additional sugar can help in the process of making the composition, by preventing or postponing fouling or gelling in the equipment. The composition can for example comprise from 2.5% to 15.0% by weight of sugar, preferably from 5.0% to 10.0%.

The composition preferably comprises a polysaccharide. Polysaccharides can help in controlling gelling of the composition, for example in preventing or postponing gelling or fouling in the equipment, and/or by moderating the gel strength of the composition. The polysaccharide can participate in protecting the whey protein, and/or in hindering aggregation. The polysaccharide can participate in complexing and/or chelating divalent cations, such as calcium, that would participate in gelling otherwise. The amount of polysaccharide can be for example of from 0.1% to 5.0% by weight, preferably from 0.5% to 2.0%. Examples of polysaccharides that can be present in the composition include starches, galactomannans, such as guar gums and locust bean gums, carrageenans, xanthane gum, maltodextrines or pectins.

The polysaccharide preferably comprises a native starch, also referred to as an unmodified starch, for example a native maize starch or waxy maize starch, for example with an amylose content of from 1% to 50%, preferably from 20% to 30%. Appropriate ingredients include starches referred to as waxy maize starch and/or native starch and/or mixtures thereof, in particular referred to as waxy maize starch and/or native maize starch and/or mixtures thereof. In a particular embodiment the native starch is a non-pregelatinized native starch. Non-pregelatinized starch refers to a starch that has not undergone modifications to render it soluble in cold water, such as swelling and/or dissolution. Non pre-gelatinized native starches typically have macromolecular amylopectin and optionally amylose in a similar arrangement that in native state, without significant rearrangement for example of the microcrystalline structure and/or inclusion of water molecules. It is mentioned that non-pregelatinized starches exclude gelatinized starches. The non pregelatinized native starch can be a native maize starch or waxy maize starch, for example with an amylose content of from 0% to 50%, preferably from 0% to 30%, for example from 0% to 5% or from 5% to 10%, or from 10% to 15%, or from 15% to 20%, or from 20% to 25% or from 25% to 30%. These contents are typically by weight. An appropriate non-pregelatinized native starch ingredient is for example Amioca powder TF, marketed by Ingredion^{®}. The polysaccharide might comprise other starches such as modified starches, for example chemically and/or physically modified starches, for example modified with cross-linkages. Such other starches include for example pre-gelatinized starches.

In one embodiment the composition comprises at least one native starch, preferably a non-pregelatinized native starch, and at least one further polysaccharide. The further polysaccharide can have suspending and/or viscosity enhancing and/or stability enhancing properties. Such further polysaccharides for example include other starches such as modified starches, for example tapioca chemically modified starches, such as National Frigex^{™} NSC marketed by Ingredion^{®}. Other further polysaccharides include for example galactomannans, such as guar gums and locust bean gums, carrageenans, xanthane gum, maltodextrines or pectins.

The composition preferably comprises some fat, preferably in a low amount. If present the amount of fat can be of at least 0.1% by weight, preferably at least 0.5%.The composition can comprise for example from 0.1% to 5.0% by weight of fat, preferably from 0.5% to 2.5%. The fat or a part thereof can be an oil, preferably a vegetal or animal oil such as fish oil. The oil can be present for example in an amount of from 0.1% to 5.0% by weight, preferably from 0.5% to 2.5%.

The composition can comprise some nutrients, different from the proteins, sugar and fat, preferably nutrients known as participating in a muscle-relating function. Examples include vitamins, such as vitamin C, vitamin B such as vitamin B6 and vitamin B9.

The composition can comprise organoleptic agents. Such agents are known for the one skilled in the art and are typically used to provide or adjust the taste or mouthfeel of the composition. The organoleptic modifiers can be for example:
- nuts pastes or extracts such as almond paste, hazelnuts compounds, chocolate, etc.
- cereals,
- fruits or fruits extracts,
- sweeteners different from sugar.

In one embodiment at least a part of the organoleptic modifiers are provided via an organoleptic preparation, often referred to as fruit preparation. Such preparations are known by the one skilled in the art, and are further detailed below.

The composition can comprise pH adjustment agents and/or buffers. For example the composition can comprise citric acid. The composition can comprise sequestrants such as sodium phosphate.

The composition preferably has an ionic strength of higher than 100 mM, preferably higher than 150 mM, preferably higher than 200 mM. Higher ionic strength are believed to help in providing viscous and/or gel textures.

### Process for making the Product

The product can be prepared by any appropriate process. Typically the product is prepared by a process comprising the following steps:
Step A) preparing the composition, and
Step B) filling the composition in the container.

Typically Step A) involves a heat-treatment step, preferably at a temperature of higher than 70°C, preferably higher than 75°C, preferably higher than 85°C. Typically the heat-treatment step is performed before filling in the container.

Preferably the composition, during its preparation, in processing equipments, is in a liquid state. The viscosity can typically increase, up to gel state, after preparation, during a storage in an appropriate tank before filling, and/or during storage of the product for example at a chilled temperature or at ambient temperature. Thus the process can comprise a step of: Step C) storing the composition in the container to allow a gel formation. In one embodiment the process comprises a maturation step between step A) and step B). It is mentioned that the maturation step can be the last step of step A).

In one embodiment:
- step A) is carried out during from 1 minute to 5 hours, preferably from 30 minutes to 4 hours,
- an optional maturation period of up to 6 hours is allowed between step A) and step B).

The temperature during the maturation period can be of from 4°C to 45°C. In one embodiment the temperature decreases from a temperature at the end of step A), for example above 45°C, to a final temperature being room temperature, or a chilled temperature. In one embodiment the maturation period is performed at stable temperature, for example at a room temperature or at a chilled temperature. The maturation can be performed in a tank.

### Process for making the composition

The composition can be prepared, as Step A) above, according to any appropriate process. In this section the process refers to the process of making the composition.

The process of making the composition typically involves a heat-treatment preferably at a temperature of higher than 70°C, preferably higher than 75°C, preferably higher than 85°C, such as pasteurization or sterilization to prevent any contamination. For neutral products having a pH of from 6.0 to 8.0 a sterilization is preferred. For neutral products to be stored at ambient temperature a sterilization is preferred. Given the high concentration of whey proteins, and the sensitivity to heat of these, that can result in a gel formation in the equipments and/or to fouling the equipments, it is preferred that the heat treatment be performed very quickly, typically with a Direct Steam Injection (DSI) technology. Thus, the preparation process involves a Direct Steam Injection step.

It is found practical to prepare at least a composition comprising the whey, with a heat treatment, preferably involving a Direct Steam Injection step, and optionally mix one or several preparations. Thus the process can comprise the following steps:
Step 1) preparing a Mass 1 composition comprising the whey protein, and
Step 2) adding at least one aqueous preparation, preferably comprising at least one polysaccharide.

Mass 1 is a composition comprising water and the whey protein. At least one aqueous preparation can be added to Mass 1. The at least one added aqueous preparation that is added can comprise at least one polysaccharide. The addition of such a polysaccharide, at such a later stage can provide a modified texture and/or control thereof. An at least one aqueous preparation comprising at least one polysaccharide can thus be also referred to as a texture control preparation.

The at least one aqueous preparation is typically added to adjust the rheology and/or the taste. In one embodiment the ratio by weight between Mass 1 and the at least one aqueous preparation is of at least 50/50, preferably between 60/40 to 90/10. If no preparation is added Mass 1 is the composition.

In one embodiment the at least one aqueous preparation comprises a Mass 2 composition comprising the at least one polysaccharide, and optionally a Mass 3 fruit preparation.

In one embodiment the at least one aqueous preparation comprises a Mass 2 composition comprising the at least one polysaccharide, and at least a Mass 3 fruit preparation.

In one embodiment Mass 1 comprises at least one polysaccharide, preferably identical to the at least one polysaccharide of the at least one aqueous preparation, typically of Mass 2. In one embodiment Mass 3 comprises at least one polysaccharide, preferably identical to the at least one polysaccharide of Mass 2.

In one embodiment the at least one aqueous preparation comprising the at least one polysaccharide, preferably a Mass 2, comprises sugar. In one embodiment Mass 1 comprises sugar. In one embodiment, Mass 1 and the at least one aqueous preparation comprising the at least one polysaccharide, preferably a Mass 2, comprise sugar.

In a preferred embodiment, the polysaccharide of the at least one aqueous preparation is a native starch.

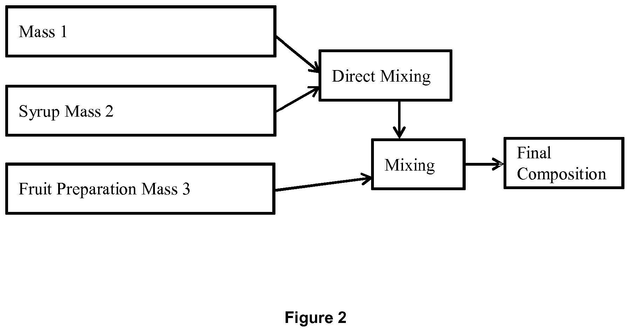

The addition to Mass 1 of the at least one aqueous preparation, typically a Mass 2 and/or a Mass 3, can be performed by any appropriate means. For example one can mix the Mass 1 and Mass 2, and then optionally mix a Mass 3. A procedure is for example represented on figure 2. Such mixing operations are known by the one skilled in the art.

Mass 1 typically comprises the whey proteins of the composition, preferably all the protein of the composition. Mass 1 is typically an aqueous composition. The water can typically be the matrix or carrier of Mass 1, wherein the ingredients are introduced. Other possible matrix or carriers are those described above for the composition. Examples include milk-based liquids, either obtained directly from milk, or reconstituted by mixing powder(s) or concentrate(s) with water. The water has preferably a low amount of mineral. The water is preferably demineralized water or osmosed water.

The concentrations of ingredients in Mass 1 can be adjusted to fit with the concentrations provided above for the composition, depending on the dilution that can be provided by adding the at least one aqueous preparation, if added. As to adjustment of the concentrations, particularly the concentration in whey protein, the concentration can be for example increased by at least 10%. Thus in Mass 1, the concentration in whey protein can be for example of at least 8.0% by weight, preferably at least 8.5%, preferably at least 8.8%, preferably at least 9.35%, preferably at least 9.5%, preferably at least 10.0%, preferably at least 10.45%, preferably at least 11.0%.

Preferably Mass 1 is an aqueous composition comprising from 10.0% to 17.5% by weight of whey protein, or from 11.0% to 19.25% by weight of whey protein.

Mass 1 can comprise some of the sugar of the composition, typically in an amount such that the weight ratio between whey proteins and sugar is of from 0.5 to 1.0 or from 1.0 to 1.7, preferably 1.22 to 1.55. Mass 1 can comprise the leucine and/or at least a part of the organoleptic modifiers. Mass 1 can comprise some of the polysaccharide, typically in an amount of from 0.1% to 5.0% by weight, preferably from 0.5% to 2.0%, preferably in an amount of at least 10% more than the amounts mentioned above for the composition, if Mass 1 is further mixed with an aqueous preparation.

The pH of Mass 1 is preferably of from 4.2 to 10.0, preferably from 5.5 to 9.0, preferably from 6.0 to 8.0, for example from 6.0 to 6.5 or from 6.5 to 7.0, or from 7.0 to 7.5 or from 7.5 to 8.0. It is believed that in this range the whey protein is typically in a form different from a colloidal suspension, which allows gelling, typically at the high concentrations of the invention, typically after some heat treatment.

Mass 1 can be prepared for example by a process comprising the following steps:
Step a) Powdering,
Step b) Optionally Oil injection,
Step c) Homogenization,
Step d) Pre-Heating,
Step e) Direct Steam Injection (DSI),
Step f) Flash cooling,
Step g) Further cooling and optionally Storing.

It is mentioned that step a) and step g) can be batch steps, while steps b) to f) are typically continuous steps.

Step a) is a powdering step. In this step powder ingredient(s), typically the whey protein and optionally a polysaccharide, are introduced in a liquid matrix or carrier, such as those described above, typically water. Such a step and equipments therefore, for example triblenders, are quite conventional and known by the one skilled in the art. In a preferred embodiment the ingredients are handled and processed with avoiding introduction of gaz. The process can otherwise comprise a degasing step, preferably at some stage before the DSI step, preferably before the pre-heating step, preferably before the homogenization step. Step a) can be carried out at a room temperature.

It is mentioned that the mixture obtained at step a) can be subjected to a pre-heating step to a temperature of from higher than room temperature to about 75°C after step a).

If the composition comprises some oil, then the oil can be typically introduced by injection at a step b), for example by an in-line injection.

Step c) is a homogenization step. Such steps are known by the one skilled in the art. The homogenization can be for example performed in conventional homogenizers at a pressure of from 20 bars to 300 bars (20 to 300 10⁵ Pa), preferably from 50 bars to 250 bars (50 to 250 10⁵ Pa), for example at 50 bars (50 10⁵ Pa). It is preferred that the homogenization be performed before the DSI step. It has been found that subjecting Mass 1 to high shears, such as shear provided by homogenization can lead to increasing gelling of the proteins in the equipments and/or to accelerating fouling of the equipments.

Step d) is a pre-heating step, before the major heat treatment by DSI. It is mentioned that if a pre-heating step has been performed before oil injection and/or homogenization, then the pre-heating step d) is performed such that the temperature is further increased. It is preferred that the pre-heating be performed at a quite mild temperature, for example at a temperature of from 50°C to 75°C, preferably from 55°C to 70°C, preferably from 60°C to 65°C. Such mild temperatures are believed to provide enough temperature increase before the DSI, while preventing or postponing gelling of the proteins and fouling of the equipments at later stage, for example at DSI step or after.

Step e) is a Direct Steam Injection (DSI) step. Such steps and appropriate equipments are known. These allow subjecting compositions to high temperatures during a short period, and thus allow sterilizing products that are heat sensitive. Preferably the DSI is performed at a temperature of from 140°C to 150°C, preferably at a temperature of 145°C. Preferably the treatment time is of from 1s to 10s, preferably from 2s to 5s. The pressure can be for example of 1 bar (10⁵ Pa).

At step f) a flash cooling is performed, to decrease efficiently the temperature. Such a step is typically performed in a flash cooler, and involves introducing the composition in a vacuum chamber. The temperature after the flash cooling step is preferably of from 50°C to 65°C, preferably from 55°C to 63°C.

At step g) a further cooling is performed, to reach a desired storage and further processing temperature, for example of from 4°C to 45°C. In one embodiment the temperature decreases, for example from a temperature above 45°C, to a final temperature being a room temperature, or a chilled temperature. It is noted that step g) can be a maturation step in conditions as mentioned above.

After step g) the Mass 1 is typically a liquid, with a viscosity of less than 1000 mPa.s at 1290 s⁻¹ at 30°C, preferably at 10°C, preferably of less than 500 mPa.s at 1290 s⁻¹ at 30°C, preferably at 10°C, preferably of less than 100 mPa.s at 1290 s⁻¹ at 30°C, preferably at 10°C.

Mass 1 can be then further processed. In one embodiment Mass 1 is temporary stored, before being introduced in the container or mixed with other preparations. For example it can be transferred to a storage tank and stored, for example at a temperature of from 2°C to 35°C, for example at a room temperature or at a chilled temperature. The storage time is preferably of at most 24h, preferably at most 6h, for example up to 3 hours.

Steps b) to f) that are typically continuous steps, especially step e), can run for a certain period of time. Upon running the equipments might progressively generate fouling that can reach a level at which stopping and cleaning would be required. The above-described process of making Mass 1 is found efficient, with allowing running periods of at least 30 minutes or even more, for example at least 1 minute, preferably at least 30 minutes, preferably at least 1 hour, preferably at least 3 hours, typically up to 6 hours, for example between 30 minutes and 4 hours.

Mass 2 can be for example an aqueous composition comprising water and ingredients, for example a polysaccharide and optionally sugar. Mass 2 is also referred to as a syrup. Mass 2 can comprise some further ingredients such as organoleptic modifiers, or some nutrients. It is mentioned that a part of the water in Mass 2 can come from ingredients used to prepare the composition. The composition can for example have a dry matter content of from 0.5% by weight to 50% by weight, preferably from 1% to 20% by weight. Mass 2 can have a water content of from 0.5% to 99.5% by weight, preferably from 1% to 80% by weight. Mass 2 can have a water content of from 50% to 99.5% by weight, preferably from 80% to 99% by weight. The water can typically be the matrix or carrier of Mass 2, wherein the ingredients are introduced. Other possible matrix or carriers are those described above for the composition. Examples include milk-based liquids, either obtained directly from milk, or reconstituted by mixing powder(s) or concentrate(s) with water. In one embodiment the matrix or carrier is a milk-based liquid. In one embodiment Mass 2 is a milk-based composition. The water has preferably a low amount of mineral. The water is preferably demineralized water or osmosed water.

Mass 2 typically comprises at least one polysaccharide, preferably in an amount of from 0.5% to 3.5% by weight. The polysaccharide preferably comprises a native starch, preferably a non-pregelatinized native starch, for example a native maize starch or waxy maize starch.

In one embodiment Mass 2 comprises at least one native starch, and at least one further polysaccharide. The further polysaccharide can have suspending and/or viscosity enhancing and/or stability enhancing properties. Such further polysaccharides for example include other starches such as modified starches, for example tapioca chemically modified starches, such as National Frigex^{™} NSC marketed by Ingredion^{®}. Other further polysaccharides include for example galactomannans, such as guar gums and locust bean gums, carrageenans, xanthane gum, maltodextrines or pectins.

Mass 2 can comprise sugar, preferably in an amount of from 1% to 20% by weight, for example from 5% to 10% by weight.

Mass 2 can be prepared by any appropriate process. Preferred processes involve a heat treatment step to ensure pasteurization and/or sterilization.

If the composition comprises some nutrients, these are preferably added in the at least one aqueous preparation such as Mass 2 or Mass 3.

Mass 3 is typically a fruit preparation. These are intermediate preparations comprising fruit and/or cereals, typically used for imparting a fruit and/or cereal taste and/or mouthfeel to food products such as dairy products.

The fruit preparation typically comprises fruits. Herein fruits refer to any fruit form, including for example full fruits, pieces, purees, concentrates, juices etc.

Typically a fruit preparation can be added in an amount of 5-35% by weight with reference to the total amount of composition.

The fruit preparation typically comprises a stabilizing system, having at least one stabilizer. The stabilizing system can comprise at least two stabilizers. Such stabilizers are known by the one skilled in the art. They typically help in avoiding phase separation of solids, for examples of fruits or fruits extracts and/or in avoiding syneresis. They typically provide some viscosity to the composition, for example a viscosity (Bostwick viscosity at 20°C) of from 1 to 20 cm/min, preferably of from 4 to 12 cm/min.

The stabilizing system or the stabilizer can for example be a starch, a pectin, a guar, a xanthan, a carrageenan, a locust bean gum, or a mixture thereof. The amount of stabilizing system is typically of from 0.5 to 5% by weight.

The fruit preparation can typically comprise organoleptic modifiers. Such ingredients are known by the one skilled in the art.

The organoleptic modifiers can be for example sweetening agents different from sugar, coloring agents, cereals and/or cereal extracts.

Examples of sweetening agents are ingredients referred to as High Intensity Sweeteners, such as sucralose, acesulfamK, aspartam, saccharine, rebaudioside A or other steviosides or stevia extracts.

Examples of fruits include for example strawberry, peach, apricot, mango, apple, pear, raspberry, blueberry, blackberry, passion, cherry, and mixtures or associations thereof, such as peach-passion.

The fruits can be for example provided as:
- frozen fruit cubes, for example 10 mm fruit cubes, for example Individual Quick Frozen fruit cubes, for example strawberry, peach, apricot, mango, apple, pear fruit cubes or mixtures thereof,
- Aseptic fruit cubes, for example 10 mm fruit cubes, for example strawberry, peach, apricot, mango, apple or pear fruit cubes or mixtures thereof,
- fruit purees, for example fruit purees concentrated from 2 to 5 times, preferably 3 times, for example aseptic fruit purees, for example strawberry, peach, apricot, mango, raspberry, blueberry or apple fruit purees or mixtures thereof,
- single aseptic fruit purees, for example strawberry, raspberry, peach, apricot, blueberry or apple single aseptic fruit purees or mixture thereof,
- frozen whole fruits, for example Individual Quick Frozen whole fruits, for example blueberry, raspberry or blackberry frozen whole fruits, or mixtures thereof,
- mixtures thereof.

The ingredients and/or components of fruit preparation and the amounts thereof are typically such that the composition has a brix degree of from 1 to 65 brix, for example from 1 to 10 brix, or from 10 to 15 brix, or from 15 to 20 brix, or from 20 to 25 brix, or from 25 to 30 brix, or from 30 to 35 brix, or from 35 to 40 brix, or from 40 to 45 brix, or from 45 to 50 brix, or from 50 to 55 brix, or from 55 to 60 brix, or from 60 to 65 brix.

The fruit preparation can for example comprise fruit in an amount of from 30% to 80% by weight, for example from 50 to 70% by weight.

The fruit preparation can comprise water. It is mentioned that a part of the water can come from ingredients used to prepare the fruit preparation, for example from fruits or fruit extracts or from a phosphoric acid solution.

The fruit preparation can comprise pH modification agents such as citric acid. The fruit preparation can have a pH of from 2.5 to 5, preferably of from 2.8 to 4.2.

### Method of use

Upon use the composition is dispensed out of the container. To do so the user can typically apply some pressure on the flexible part of the container to force the composition out of an opening. Thus the dispensing can be performed by applying a force on the container, preferably by pressing the container, preferably with a human hand. The opening can have for example a size (length, width or diameter for example) of from 1 mm to 15 mm. This dispensing is typically performed via an opening having a size of from 1 mm to 15 mm. In a preferred embodiment the dispensing is performed in the mouth of a human, for the composition to be orally ingested. It is however not excluded that the composition be dispensed in a cup or on a plate or on a spoon and then be ingested.

When dispensed out of the container, typically via the opening, the composition presents a texture and/or mouthfeel appreciated by consumer. It is mentioned that the dispensing through the opening might provide some shear and might slightly change the texture and/or mouthfeel of the composition. Such slightly modified texture and/or mouthfeel are appreciated by consumer.

Further details or advantages of the invention might appear in the following non limitative examples and on the following figures.

### Figures

Figure 1 represents a preparation process of Mass1.
Figure 2 represents a preparation process of the final composition according to the invention.

### Examples

Preparation of compositions is described in example 1. The compositions are then packaged in containers, as described in example 2.

### Example 1 - Preparation of compositions

A final composition is prepared by mixing the 3 intermediate masses, as shown on figure 2.

Intermediate Mass 1 is a composition comprising a high amount of whey protein, further detailed below.

Intermediate Mass 2 is a syrup composition, further detailed below.

Intermediate Mass 3 is a fruit preparation, further detailed below.

### Mass 1

Mass 1 has the composition shown on table 1 below.

**Table 1**

| **Ingredient** | **Wt % (as is)** |
|---|---|
| Fish oil: Omegavi 1812, Polaris^{®} | 0.77% |
| WPI Lacprodan^{®} 9224, Arla^{®} | 13.20% |
| Sodium Caseinate: EM7, DMV^{®} | 1.42% |
| L-Leucine | 0.48% |
| Native Starch: Amioca Powder TF, Ingredion^{®} | 0.75% |
| Cristal sugar | 9.00% |
| Almond Past 95%, Fruisec^{®} | 2.20% |
| Osmosed Water | 72.18% |
| Total | 100% |
| pH | 6.7 |

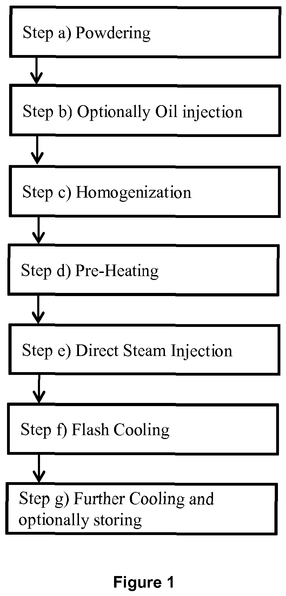

The preparation process of Mass1 is a continuous process involving a direct stream injection (DSI) step, and is represented on figure 1. This process, as well as the operating parameters, allow an efficient preparation, avoiding fouling the equipment during a significant running time period.

### Step a)

The almond past is pumped into the tank containing the osmosed water before addition of the powders using a classical dispersion system (YSTRAL Conti TDS).

### Step b)

The oil is injected on line using a volumetric pump.

### Step c)

A one step homogenization is performed with an APV Gaulin homogenizer at 50 bars (50 10⁵ Pa) at a temperature of 20°C.

### Step d)

A pre-heating step is performed to reach a temperature of 63°C with a standard plate-heat exchanger.

### Step e)

A heating step is performed with a Direct Steam Injection system at 145°C during 4s, at 1 bar (10⁵ Pa).

### Step f)

Flash cooling step is performed in a flash cooler to decrease temperature to 55°C.

### Step g)

A cooling step is performed with a standard plate-heat exchanger to reach a temperature of 25°C. The product is transferred and stored in an aseptic tank at a temperature of 10°C.

### Mass 2

Mass 2 has the composition shown on table 2 below.

**Table 2**

| **Ingredient** | **Wt % (as is)** |
|---|---|
| Skimmed Milk | 83.80% |
| Cristal sugar | 10.00% |
| Native Starch: Amioca Powder TF, Ingredion^{®} | 1.50% |
| Modified Starch: National Frigex^{™} NSC, Ingredion^{®} | 1.70% |
| Almond Past 95%, Fruisec^{®} | 3.00% |
| Total | 100% |
| pH | 6.6 |

Mass 2 is prepared by the following procedure:
- The almond past is pumped into the skimmed milk then the other ingredients in powder form are added, using a powdering system (Ystral Conti TDS);
- A pre-heating step is performed to reach a temperature of 63°C, using standard plate heat exchanger;
- An homogenization is performed with an APV Gaulin homogenizer at 100 bars (10⁷ Pa) at 63°C
- A pasteurization is performed at 95°C during 6 min;
- A sterilization step is performed at 131 °C during 60s with plate heat exchanger;
- A first cooling step is performed to reach a temperature of 40°C and then a second cooling step is performed to reach 10°C, both being done with a standard plate heat exchanger.

### Mass 3

Mass 3 is a fruit preparation prepared conventionally, having the composition shown on table 3 below.

**Table 3**

| **Ingredient** | **Wt % (as is)** |
|---|---|
| apple fruit pieces | 56.00% |
| cracked wheat | 3.00% |
| cracked oat | 2.20% |
| wheat bran | 1.47% |
| saccharose | 19.80% |
| carrageenan | 0.30% |
| maize modified starch | 2.30% |
| citric acid | 0.30% |
| sodium citrate | 0.01% |
| chlorophyl colorant | 0.05% |
| water | 14.205% |
| calcium lactate | 0.08% |
| vitamin C encapsulated | 0.274% |
| vitamin B6 (pyridoxine hydrochloride) | 0.004% |
| vitamin B9 (folic acid) | 0.001% |
| mix vitamin B12 0.1% | 0.006% |
| Total | 100% |
| pH | 4.1 |

### Final composition

The final composition is shown on table 4 below. It is obtained by mixing 75 parts by weight of Mass 1, 10 parts by weight of Mass 2 and 15 parts by weight of Mass 3, as shown on figure 2. The final composition obtained is shown on table 4 below.

**Table 4**

| **Ingredient** | **Wt % (as is)** |
|---|---|
| Fish oil: Omegavi 1812, Polaris^{®} | 0.58% |
| WPI Lacprodan^{®} 9224, Arla^{®} | 9.90% |
| Sodium Caseinate: EM7, DMV^{®} | 1.065% |
| L-Leucine | 0.36% |
| Native Starch: Amioca Powder TF, Ingredion^{®} | 0.745% |
| Modified Starch: National Frigex^{™} NSC, Ingredion^{®} | 0.17% |
| Cristal sugar | 7.75% |
| Almond Past 95%, Fruisec^{®} | 1.95% |
| Skimmed Milk | 8.38% |
| Osmosed Water | 54.10% |
| Fruit preparation: mass 3 | 15.00% |
| Total | 100% |
| pH | 6.2 |

Table 5 below presents some nutritional information of the composition.

**Table 5**

| | | **Wt %** | **kcal** |
|---|---|---|---|
| Total Protein | | 10.38 | 41.61 (38%) |
| | Whey Protein | 9.31 | |
| | Leucine | 1.38 | |
| Carbohydrates | | 13.16 | 55.55 (48%) |
| | Sugar | 11,52 | |
| Fat | | 1.70 | 15.33 (14%) |
| | Saturated | 0.10 | |
| Fiber | | 1.65 | |
| Sodium | | 0.07956 | |
| Calcium | | 0.02410 | |
| Energy | | | 109.49 kcal |

### Evaluations

Mass 1 is a liquid that does not foul the processing equipments during up to 3 hours processing. The viscosity (at 30°C, at 1290 s⁻¹ after 10s) upon storing is about 80 mPa.s and remains stable during about 2h30min.

Mass 2 is a stable liquid, with a viscosity (at 30°C, at 1290 s⁻¹ after 10s) of about 80 mPa.s.

### Example 2: Packaging

The final composition obtained at example 1 is filled in a cup or in a flexible pouch.
- A quantity of 150g is filled to the top of standard 125 g yogurt cup (Erca type cup - the headspace allowing filling up to 150g)
- A quantity of 150g is filled in a 200 ml pouch.

The products are stored at 10°C.

The gel strength is measured directly in the containers.

### Results:

The gel strength in the cup is always higher, by about 20%, than the gel strength in the pouch.

After at storage of 14 Days at 10°C, the gel strength in the cup is 2920 g, whereas the gel strength in the pouch is of 2330 g.

This shows that packaging in a flexible container allows a control of rheology of the product, limiting gelling over shelf life.

## Claims

1. A product comprising a container and a viscous composition contained in the container, wherein:
- the composition comprises at least 8.0% by weight of whey protein, has a pH of from 6.0 to 8.0, and has an energy density of less than 200 kcal per 100 g, and
- the container is a flexible container.

2. The product according to claim 1, wherein the container is a pouch.

3. The product according to any one of the preceding claims, wherein the container has an opening, preferably having a size of from 1 mm to 15 mm, preferably closed by a non-flexible cap.

4. The product according to any one of the preceding claims, wherein the volume of composition corresponds to 70-100% of the maximum volume of the container.

5. The product according to any one of the preceding claims, wherein the container has a maximum volume of from 50 mL to 500 mL.

6. The product according to any one of the preceding claims, wherein the composition further comprises sugar.

7. The product according to any one of the preceding claims, wherein the composition further comprises a polysaccharide, preferably a starch.

8. The product according to any of the preceding claims, wherein the composition is an aqueous composition comprising from 10.0% to 17.5% by weight of whey protein.

9. The product according to any one of the preceding claims, wherein the composition has a gel strength in the container of from 1000 g to 8000 g, preferably from 1000 g to 5000 g, preferably from 1000 g to 2800 g.

10. The product according to any one of the preceding claims, stored at a chilled temperature or at an ambient temperature.

11. The product according to any one of the preceding claims, wherein the composition comprises at least 0.5% by weight of fat, preferably of oil, preferably fish oil.

12. The product according to any one of the preceding claims, wherein the composition has a dry matter content of up to 60% by weight, preferably from 8% to 50% by weight.

13. A process of making the product according to any one of the preceding claims, comprising the steps of:
Step A) preparing the composition, and
Step B) filling the composition in the container.

14. The process according to claim 13, further comprising a step of:
Step C) storing the composition in the container to allow a gel formation.

15. The process according to any one of claims 13 and 14, wherein
- step A) is carried out during from 1 minute to 6 hours, preferably from 30 minutes to 4 hours,
- a maturation period of up to 6 hours is allowed between step A) and step B), preferably at a temperature of from 4°C to 45°C.

16. The use of the product according to any one of claims 1 to 12, for dispensing the composition out of the container.

17. The use according to claim 16, wherein dispensing is performed in the mouth of a human.

18. The use according to any one of claims 16 and 17, wherein dispensing is performed via an opening having a size of from 1 mm to 15 mm.

## Patentansprüche

1. Produkt, das einen Behälter und eine viskose Zusammensetzung umfasst, die in dem Behälter enthalten ist, wobei:
- die Zusammensetzung mindestens 8,0 Gewichts-% Molkenprotein umfasst, einen pH-Wert von 6,0 bis 8,0 aufweist und eine Energiedichte von weniger als 200 kcal pro 100 g aufweist, und
- der Behälter ein biegsamer Behälter ist.

2. Produkt nach Anspruch 1, wobei der Behälter ein Beutel ist.

3. Produkt nach einem der vorhergehenden Ansprüche, wobei der Behälter eine Öffnung aufweist, die vorzugsweise eine Größe von 1 mm bis 15 mm aufweist und die vorzugsweise von einer nicht biegsamen Kappe verschlossen ist.

4. Produkt nach einem der vorhergehenden Ansprüche, wobei das Volumen der Zusammensetzung 70 bis 100 % des Höchstvolumens des Behälters entspricht.

5. Produkt nach einem der vorhergehenden Ansprüche, wobei der Behälter ein Höchstvolumen von 50 ml bis 500 ml aufweist.

6. Produkt nach einem der vorhergehenden Ansprüche, wobei die Zusammensetzung ferner Zucker umfasst.

7. Produkt nach einem der vorhergehenden Ansprüche, wobei die Zusammensetzung ferner ein Polysaccharid, vorzugsweise eine Stärke, umfasst.

8. Produkt nach einem der vorhergehenden Ansprüche, wobei die Zusammensetzung eine wässrige Zusammensetzung ist, die von 10,0 bis 17,5 Gewichts-% Molkenprotein umfasst.

9. Produkt nach einem der vorhergehenden Ansprüche, wobei die Zusammensetzung eine Gelfestigkeit im Behälter von 1000 g bis 8000 g, vorzugsweise von 1000 g bis 5000 g, vorzugsweise von 1000 g bis 2800 g, aufweist.

10. Produkt nach einem der vorhergehenden Ansprüche, das bei einer gekühlten Temperatur oder bei einer Umgebungstemperatur gelagert wird.

11. Produkt nach einem der vorhergehenden Ansprüche, wobei die Zusammensetzung mindestens 0,5 Gewichts-% Fett, vorzugsweise Öl, vorzugsweise Fischöl, umfasst.

12. Produkt nach einem der vorhergehenden Ansprüche, wobei die Zusammensetzung einen Trockensubstanzgehalt von bis zu 60 Gewichts-%, vorzugsweise von 8 bis 50 Gewichts-%, aufweist.

13. Verfahren zur Herstellung des Produkts nach einem der vorhergehenden Ansprüche, das die folgenden Schritte umfasst:
Schritt A) Herstellen der Zusammensetzung, und
Schritt B) Füllen der Zusammensetzung in den Behälter.

14. Verfahren nach Anspruch 13, das ferner einen folgenden Schritt umfasst:
Schritt C) Lagern der Zusammensetzung in dem Behälter, um eine Gelbildung zuzulassen.

15. Verfahren nach einem der Ansprüche 13 und 14, wobei
- Schritt A) während 1 Minute bis 6 Stunden, vorzugsweise während 30 Minuten bis 4 Stunden, durchgeführt wird,
- eine Reifezeit von bis zu 6 Stunden zwischen Schritt A) und Schritt B), vorzugsweise bei einer Temperatur von 4°C bis 45°C, zugelassen wird.

16. Verwendung des Produkts nach einem der Ansprüche 1 bis 12 zum Abgeben der Zusammensetzung aus dem Behälter.

17. Verwendung nach Anspruch 16, wobei das Abgeben in den Mund eines Menschen durchgeführt wird.

18. Verwendung nach einem der Ansprüche 16 und 17, wobei das Abgeben über eine Öffnung durchgeführt wird, die eine Größe von 1 mm bis 15 mm aufweist.

## Revendications

1. Produit comprenant un contenant et une composition visqueuse contenue dans le contenant, dans lequel :
- la composition comprend au moins 8,0 % en poids de protéines de lactosérum, a un pH allant de 6,0 à 8,0, et a une densité énergétique inférieure à 200 kcal par 100 g, et
- le contenant est un contenant flexible.

2. Produit selon la revendication 1, dans lequel le contenant est une poche.

3. Produit selon l'une quelconque des revendications précédentes, dans lequel le contenant présente une ouverture, de préférence d'une taille allant de 1 mm à 15 mm, de préférence fermée par un bouchon non flexible.

4. Produit selon l'une quelconque des revendications précédentes, dans lequel le volume de la composition correspond à 70-100% du volume maximal du contenant.

5. Produit selon l'une quelconque des revendications précédentes, dans lequel le contenant a un volume maximal de 50 mL à 500 mL.

6. Produit selon l'une quelconque des revendications précédentes, dans lequel la composition comprend en outre du sucre.

7. Produit selon l'une quelconque des revendications précédentes, dans lequel la composition comprend en outre un polysaccharide, de préférence un amidon.

8. Produit selon l'une des revendications précédentes, dans lequel la composition est une composition aqueuse comprenant de 10,0 % à 17,5 % en poids de protéines de lactosérum.

9. Produit selon l'une des revendications précédentes, dans lequel la composition a une force de gel dans le contenant de 1000 g à 8000 g, de préférence de 1000 g à 5000 g, de préférence de 1000 g à 2800 g.

10. Produit selon l'une des revendications précédentes, stocké à une température réfrigérée ou à une température ambiante.

11. Produit selon l'une quelconque des revendications précédentes, dans lequel la composition comprend au moins 0,5% en poids de matière grasse, de préférence d'huile, de préférence d'huile de poisson.

12. Produit selon l'une des revendications précédentes, dans lequel la composition a une teneur en matière sèche allant jusqu'à 60 % en poids, de préférence de 8 % à 50 % en poids.

13. Procédé de fabrication du produit selon l'une quelconque des revendications précédentes, comprenant les étapes suivantes :
Etape A) préparation de la composition, et
Etape B) remplissage de la composition dans le contenant.

14. Procédé selon la revendication 13, comprenant en outre une étape de :
Etape C) stockage de la composition dans le contenant pour permettre la formation d'un gel.

15. Procédé selon l'une quelconque des revendications 13 et 14, dans lequel
- l'étape A) est réalisée pendant une durée allant de 1 minute à 6 heures, de préférence de 30 minutes à 4 heures,
- une période de maturation allant jusqu'à 6 heures est autorisée entre l'étape A) et l'étape B), de préférence à une température allant de 4°C à 45°C.

16. Utilisation du produit selon l'une quelconque des revendications 1 à 12, pour distribuer la composition hors du contenant.

17. Utilisation selon la revendication 16, dans laquelle la distribution est effectuée dans la bouche d'un être humain.

18. Utilisation selon l'une quelconque des revendications 16 et 17, dans laquelle la distribution est effectuée par une ouverture ayant une taille allant de 1 mm à 15 mm.
